(19) Europäisches Patentamt

**European Patent Office**

**Office européen des brevets**

(11) Veröffentlichungsnummer: **0 327 982 B1**

## (12) EUROPÄISCHE PATENTSCHRIFT

(45) Veröffentlichungstag der Patentschrift: **03.02.93**

(21) Anmeldenummer: **89101857.4**

(22) Anmeldetag: **03.02.89**

(51) Int. Cl.⁵: **H04N 7/01**

(54) **Transcoder.**

(30) Priorität: **09.02.88 DE 3803835**

(43) Veröffentlichungstag der Anmeldung:
**16.08.89 Patentblatt 89/33**

(45) Bekanntmachung des Hinweises auf die
Patenterteilung:
**03.02.93 Patentblatt 93/05**

(84) Benannte Vertragsstaaten:
**AT BE CH DE ES FR GB GR IT LI LU NL SE**

(56) Entgegenhaltungen:
**DE-A- 3 304 030**
**DE-A- 3 444 836**
**DE-A- 3 542 102**
**DE-A- 3 625 932**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Hartnack, Wolfgang, Dipl.-Ing.
Saarstrasse 22
W-3005 Hemmingen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Transcoder zur Umwandlung eines hochaufgelösten Videosignals mit Zeilensprung in ein Videosignal ohne Zeilensprung.

Zur Bildwiedergabeverbesserung eines Videosignals ist vorgeschlagen worden, die Zeilenzahl von z.Zt. 625 Zeilen pro Vollbild auf 1250 Zeilen zu erhöhen. Wegen der hohen zu verarbeitenden Leistung und der damit einhergehenden Bandbegrenzung der Geräte wird die heute übliche Bildwechselfrequenz von 50 Hz sowie das Zeilensprungverfahren beibehalten. Trotz der erhöhten Zeilenzahl kommt es auch bei diesem Wiedergabeverfahren zu einem Zwischenzeilenflimmern, sowie zu einer Reduktion der vertikalen Auflösung durch eben dieses Zeilensprungverfahren.

Aufgabe der Erfindung ist es, einen Transcoder anzugeben, der mit möglichst großer vertikaler Auflösung und niedriger Taktrate in einem Verarbeitungsschritt ein Bildsignal einer ersten Norm in ein Bildsignal einer zweiten Norm umsetzt.

Die Erfindung wird durch die im Patentanspruch 1 angegebenen Maßnahmen gelöst. Vorteilhafte Weiterbildungen der Erfindung sind in den Unteransprüchen beschrieben.

Zur Transcodierung des Bildsignals der ersten Norm in ein Bildsignal der zweiten Norm ist eine Digitalisierung sowie Speicherung des Bildsignals der ersten Norm erforderlich. Vorzugsweise werden drei Vollbildspeicher verwendet. In einem ersten Bildspeicher wird das ankommende Bildsignal der ersten Norm mit Zeilensprung eingeschrieben, während zeitlich synchron aus den beiden anderen Bildspeichern ausgelesen wird. Zur Verarbeitung der Bildpunkte des Bildsignals der ersten Norm werden diese in Zeilenspeicher eingelesen.

Anschließend wird überprüft, ob die Bildpunkte dynamische oder statische Informationsinhalte enthalten. Abhängig davon, ob dynamische Informationsinhalte detektiert wurden, werden zur Durchführung einer vertikalen Filterung unterschiedliche Filterkoeffizientensätze und zugehörige Bildpunkte zur Filterung ausgewählt. Weil sich bei der Transcodierung von einem Bildsignal der ersten Norm mit 1250 Zeilen in ein Videosignal der zweiten Norm mit 900 Zeilen die Lagen der Zeilen zueinander sich periodisch wiederholen, d.h. die räumliche Lage der Zeilen vom Eingangs- und Ausgangsbild nach jeweils drei Zeilen des Ausgangsbildes identisch ist mit der Zeilenlage des Eingangsbildes, werden pro Auflösung bzw. Halbbild drei Koeffizientensätze benötigt. Insgesamt sind somit sechs bzw. neun Koeffizientensätze erforderlich.

Bedingt durch den Zeilensprung des Bildsignals der ersten Norm tritt eine Verschiebung der Zeilenlage für das zweite Halbbild ein. Deshalb ist es erforderlich, gleichzeitig mit der Transcodierung auch eine örtliche Korrektur der Zeilenlage durchzuführen, und zwar in der Vertikalrichtung.

Der Vorteil der Erfindung besteht darin, daß die Filterung mit wenigen Koeffizienten in einem Schritt durchgeführt wird, ein einfacher Bewegungsdetektor erforderlich ist, und eine relativ geringe Taktfrequenz von 81 MHz verwendet wird.

Nachstehend wird ein Ausführungsbeispiel anhand der Zeichnung erläutert:

Fig. 1     Transcoder
Fig. 2     Vertikalfilter
Fig. 3     ein Zeitdiagramm
Fig. 4     Verarbeitungsablauf aufgetragen über die Zeit
Fig. 5     Filterkoeffizienten
Fig. 6     Filterantwort.

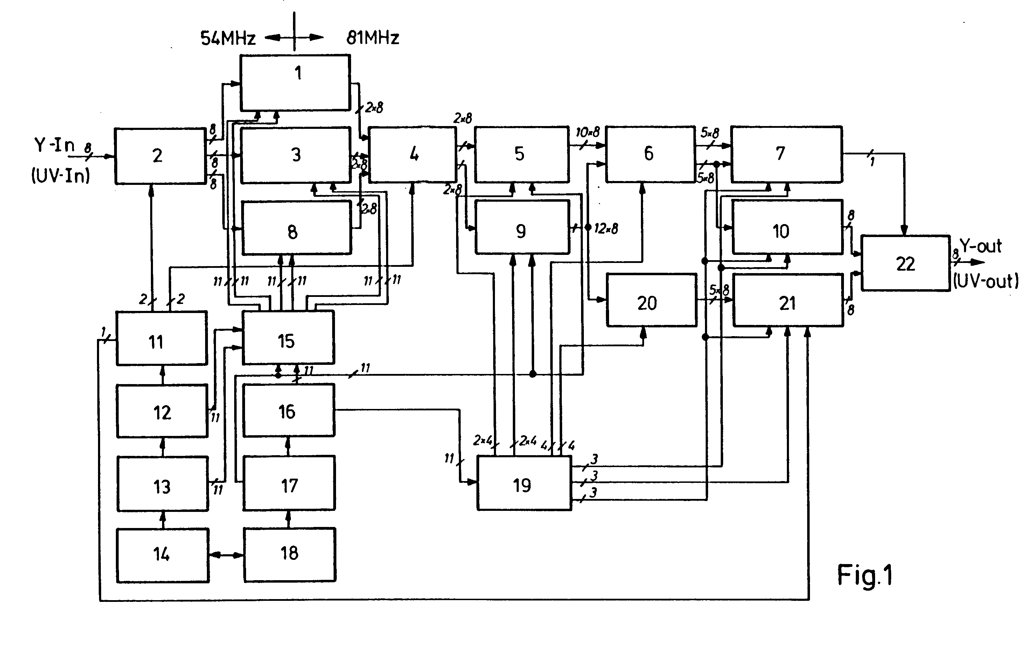

Fig. 1 zeigt einen erfindungsgemäßen Transcoder. An der Klemme Y-In wird über acht parallelen Eingangsleitungen das zu verarbeitende Bildsignal einem Umschalter 2 zugeführt. Dieser Umschalter 2 wird durch einen Halbbild-Adressengenerator 11 gesteuert, dessen Ausgänge in Abhängigkeit von der Adressierung des Halbbild-Adressengenerator 11 auf die drei Vollbildspeicher 1,3 und 8 umgeschaltet werden können. Ein Taktgenerator 14 stellt über einen Spaltenadressenzähler 13 und einen Zeilenadressenzähler 12 diesen Halbbildadressenzähler 11 ein. Parallel zu dem Umschalter 2 wird von diesem Halbbildadressenzähler 11 ein weiterer Umschalter 4 angesteuert. Dieser Umschalter 4 schaltet die Ausgänge der Vollbildspeicher 1,3 und 8 auf Zeilenspeicher 5 und 9. Die Vollbildspeicher 1,3 und 8 haben je zwei * acht Ausgangsleitungen, welche über den Umschalter 4 auf die Zeilenspeicher 5 und 9 geschaltet werden können. Weitere Ausgänge der Zeilen- und Spaltenadressenzähler (12,13) führen auf einen Adressenbusschalter 15. Mit Hilfe dieses Adressenbusschalters 15 werden die Vollbildspeicher 1,3 und 8 angesteuert. Ein weiterer Taktgenerator 18, dessen Taktfrequenz 81 MHz beträgt, und welcher mit dem Taktgenerator 14 mit einer Taktfrequenz von 54 MHz phasenmäßig verkoppelt ist, steuert Spalten- und Adressenzähler 17,16. Ausgänge des Spaltenadressenzählers 17 und des Zeilenzählers 16 führen ebenfalls auf den Adressenbusumschalter 15. Ein weiterer Ausgang des Zeilenzählers 16 führt auf einen Zeilen- und Koeffizienten-Adressengenerator 19. Dieser Zeilen- und Koeffizienten-Adressengenerator 19 ist einerseits mit den

EP 0 327 982 B1

Zeilenspeichern 5 und 9 über zwei * vier Leitungen verbunden, andererseits mit Zeilenschaltern 6 und 20 über je vier Adressenleitungen. Der Zeilenschalter 6 hat weitere Eingänge zehn * acht Vom Zeilenspeicher 5 sowie Eingänge zwölf * acht vom Zeilenspeicher 9. Die Zeilenspeicher 5 und 9 sind über elf Leitungen mit dem Spaltenadressenzähler 17 verbunden. Weiterhin führen zwölf * acht Leitungen des Zeilenspeichers 9 auf den Zeilenschalter 20. Der Zeilenschalter 6 führt je 5 mal zwei * acht Leitungen auf Eingänge von 5 parallelen Bewegungsdetektoren 7 sowie 5 mal 8 Leitungen auf 5 parallelgeschaltete vertikale statische Filter 10. Der Zeilenschalter 20 ist über 5 mal acht Leitungen mit 5 parallelgeschalteten für dynamische Informationsinhalte zuständigen vertikalen Filtern 21 verbunden. Weitere Ausgänge des Zeilen- und Koeffizienten-Adressengenerators 19 führen über je drei Leitungen einerseits auf den Bewegungsdetektor 7 und das statische Vertikalfilter 10, auf das für dynamische Informationsinhalte zuständige vertikale Filter 21 sowie auf den Bewegungsdetektor 7, das statische Vertikalfilter 10 und das für dynamische Informationsinhalte zuständige vertikale Filter 21. Das vertikale Filter 21 ist über eine Leitung zusätzlich mit dem Halbbildadressengenerator 11 verbunden. Ein Ausgang des Bewegungsdetektors 7 ist über eine Leitung mit einem statisch/Bewegungsumschalter 22 verbunden. Je acht Leitungen des statischen vertikalen Filters 10 und des für dynamische Informationsinhalte zuständigen vertikalen Filters 21 führen auf Eingänge des statisch/dynamische Bewegungsumschalters 22. Am Ausgang des statisch/Bewegungsumschalters 22 liegt das transcodierte Signal an. Die Schaltungsteile Bewegungsdetektor 7, das statisch vertikale Filter 10, sowie das für die Bewegung zuständige vertikale Filter 21 sind je fünfmal vorhanden.

Funktionsbeschreibung von Fig. 1. Die ankommenden Daten des 1250 Zeilen Bildes werden durch den Umschalter 2, welcher durch den Halbbildadressengenerator 11 gesteuert wird, auf den jeweiligen Vollbildspeicher 1,3,8 geschaltet, welcher die Bilddaten eines Bildes n-3 enthält. Diese Daten sind für die weitere Berechnung nicht mehr erforderlich. Gleichzeitig schaltet der Halbbildadressengenerator 11 den Umschalter 4 beispielsweise auf den Vollbildspeicher 3, welcher die Daten des Bildes n-1 enthält. Die Vollbildspeicher 1,3,8 speichern einerseits die 1152 aktiven Zeilen des 1250 Zeilen Bildes. Aus der Notwendigkeit, Zeilen in kontinuierlicher Reihenfolge zur Verfügung zu stellen bei einer Reduktion von vier auf drei Zeilen und aufgrund des Taktes 14,18 gemeinsam mit dem Einlesen in den Vollbildspeicher 1 Vollbildspeicher 3 bzw. 8 auszulesen, muß jede dritte Zeile den Inhalt doppelt aufweisen. Über den Umschalter 4 werden einerseits die Daten des Bildes n-1 in den 12 Zeilenspeicher 9 als auch die Daten des Bildes n-2 in den 10 Zeilenspeicher 5 eingeschrieben. Der Zeilenumschalter 6 sortiert die Daten der Zeilenspeicher 5 und 9 entsprechend Tabelle 1 und leitet sie weiter zur Berechnung einerseits an den Bewegungsdetektor 7, welcher sowohl Daten aus den Zeilenspeichern 5 als auch aus den Zeilenspeichern 9 erhält, sowie die Daten aus dem Zeilenspeicher 9 zu dem vertikalen statischen Filter 10. Der Zeilenschalter 20 schaltet die Daten des Zeilenspeichers 9 auf das für dynamische Informationsinhalte zuständige vertikale Filter 21. Der Bewegungsdetektor 7, das vertikale statische Filter 10 sowie das für dynamische Informationsinhalte zuständige vertikale Filter 21 sind fünfmal vorhanden, weil zu jedem Takt ein Wert berechnet wird, für die Berechnung jedoch fünf Werte vorhanden sein müssen. Am Ausgang dieser Schaltungsteile liegt somit mit jedem Takt ein berechneter Wert an. Je nachdem, ob der Bewegungsdetektor dynamische Informationsinhalte detektiert hat oder nicht, schaltet der Umschalter 22 einen Ausgang des vertikalen statischen Filters 10 oder des für dynamische Informationsinhalte zuständigen vertikalen Filters 21 auf seinen Ausgang. Wie der Schaltung zu entnehmen ist, enthält der dynamische Bewegungsdetektor 7 dieselben Daten wie das vertikale statische Filter 10, jedoch zusätzlich Daten aus dem Inhalt des 10-Zeilenspeichers 5. Die Filterkoeffizienten sind in den Filtern 10,21 fest eingebaut. Der Bewegungsdetektor 7 weist keine derartigen Filterkoeffizienten auf, weil, wie weiter unten aufgezeigt, für die Betragsrechnung dieser Koeffizient den Wert 1 haben kann. Der Adressenbusschalter 15 übernimmt die zentrale Steueraufgabe. Für den Schreibvorgang eines Vollbildspeichers 1,3,8 schaltet er den Zeilenadressenzähler 12 sowie den Spaltenadressenzähler 13 auf den einzuschreibenden Vollbildspeicher. Für den Auslesevorgang schaltet er den Zeilenzähler 16 und den Spaltenzähler 17 auf die Vollbildspeicher 3,8. Dieser Vorgang wiederholt sich zyklisch, je nachdem welcher Vollbildspeicher 1,3,8 gerade beschrieben bzw. ausgelesen wird. Eine weitere Verbindung besteht von dem Zeilenzähler 16 zum Koeffizienten- und Zeilenadressengenerator 19. Dieser Koeffizienten- und Zeilenadressengenerator 19 berechnet aus dem Zeilenzähler 16 die jeweils für die Berechnung anstehenden aktuellen Zeilen der Zeilenspeicher 5,9 und die jeweils anstehenden Adressen für die Koeffizientensätze.

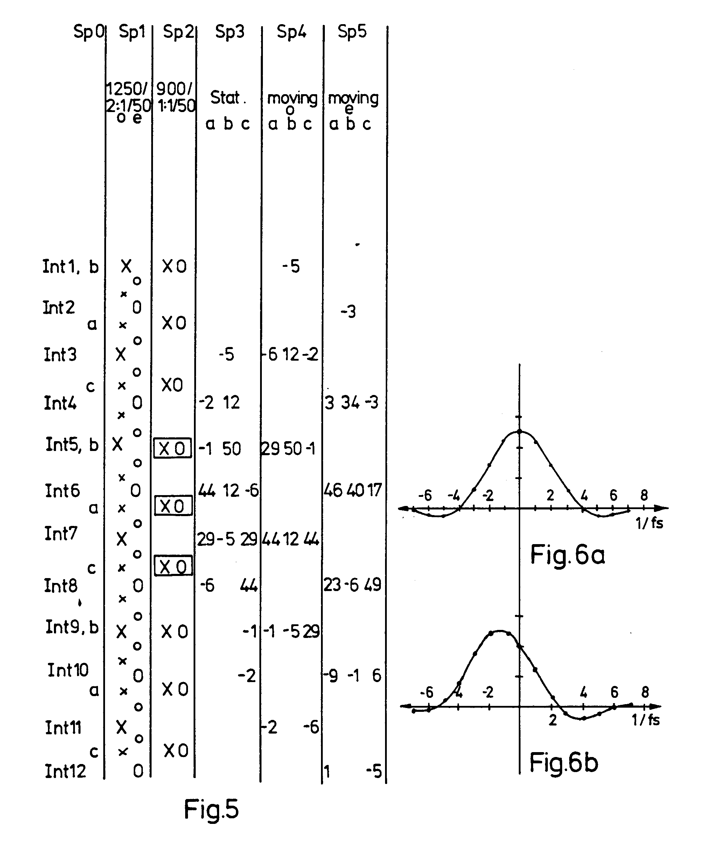

Fig. 5 zeigt die Wirkungsweise der Vertikalfilterung für den statischen als auch den dynamischen Fall einer 1250 Zeilen Bildinformation in eine 900 Zeilen Bildinformation. In Spalte 1 ist eine Spalte von Bildpunkten der Halbbilder des 1250 Zeilen Videobildes dargestellt. Dabei kennzeichnet X die Bildpunkte übereinanderliegender ungeradzahliger Zeilen und O die Bildpunkte der übereinanderliegenden geradzahligen Zeilen. In Spalte 2 sind die Lagen der Bildpunkte bei einem 900 Zeilen Videosignal eingezeichnet. Da bei einem 900 Zeilen Videosignal die Zeilen eines Bildes nacheinander geschrieben werden, fallen, wie der

3

EP 0 327 982 B1

Spalte 2 zu entnehmen ist, im Gegensatz zu den Bildpunkten X,O des 1250 Zeilen Bildes der Spalte 1 diese Bildpunkte X,O räumlich in dieselben Zeilen. Die Lagen der Zeilen des 900 Zeilen Bildes sind in Spalte 0 abwechselnd mit a,b,c, die Lagen der Zeilen des 1250 Zeilen Bildes aufsteigend mit Int1...Int12 gekennzeichnet. Wie den Spalten 1 und 2 zu entnehmen ist, stimmt die Lage der Bildpunkte des 1250 Zeilen Bildes nur bei der Lage b mit denen des 900 Zeilen Bildes überein. Da rein rechnerisch nur aus existierenden Bildpunkten des 1250 Zeilen Bildes Bildpunkte des 900 Zeilen Bildes gewonnen werden können, sind in den Lagen a und c des 900 Zeilen Bildes fiktive Nullwerte x,o des 1250 Zeilen Bildes eingefügt. Um eine möglichst hohe vertikale Auflösung des 900 Zeilen Bildes zu erreichen, wird der Bildpunkt eines 900 Zeilen Bildes rein rechnerisch aus 15 Bildpunkten des 1250 Zeilen Bildes ermittelt, wobei jedoch 10 Bildpunkte des 1250 Zeilen Bildes fiktive Bildpunkte - Nullwerte - sind, also den Wert Null aufweisen. Aus diesem Grunde ist es deshalb ausreichend, für jede der unterschiedlichen Lagen a,b,c für die Berechnung der Bildpunkte des 900 Zeilen Bildes nur fünf Koeffizienten der Filterkurve bereitzustellen. Wie aus der Fig. 5 Spalte 3 zu entnehmen ist, unterscheiden sich diese Koeffizienten je nach Lage des zu errechnenden Bildpunktes des 900 Zeilen Bildes. Dies ist der Impulsantwort nach Fig. 6a für den stationären Fall zu entnehmen.

Einleitend ist zu bemerken, daß bei einem 1250 Zeilen Bild nur 1152 aktive Zeilen existieren. Ein solches Bild hat ein vertikales Auflösevermögen von maximal 576 cph, wobei cph die Abkürzung für cycles per picture hight ist. Diese maximale Auflösung gilt nur für den statischen Fall. Bei Bewegung reduziert sich die Auflösung auf die Hälfte, da das 1250 Zeilen Bild im Zeilensprungverfahren arbeitet. Es wird jeweils nur ein Halbbild von 625 Zeilen, d.h. 576 aktiven Zeilen wiedergegeben mit einer Bildwiederholfrequenz von 2*25 Hz. Für den dynamischen Fall ergibt sich somit eine vertikale Auflösung von maximal 288 cph. Bei einem 900 Zeilen Bild liegen 864 aktive Zeilen vor, d.h. die maximale vertikale Auflösung beträgt 432 cph. Im Falle einer statischen Information des 1250 Zeilen Bildes wird somit die vertikale Auflösung bei der Transcodierung von 576 cph auf 432 cph reduziert. Im Falle einer Bewegungsinformation hingegen bewirkt die Verwendung eines Filters, wie es für die statische Transcodierung seinen Einsatz findet, eine Reduzierung der vertikalen Auflösung von 288 cph auf 216 cph. Wie eingangs gesagt, hat das 900 Zeilen Bild eine Auflösung von 432 cph. Da die Senke keine höhere Auflösung als die Quelle aufweisen kann, kann durch geeignete Filter die in den Halbbildern vorhandene vertikale Auflösung durch die Transcodierung erhalten bleiben.

Erfindungsgemäß können Filter 10, 21 mit folgenden zwei folgenden zwei Filterkoeffizientensätze verwendet werden:

1.a. für statische Bildinformation sowie bewegte Bildinformation des ersten Halbbildes
-2, -5, -6, -1, 12, 29, 44, 50, 44, 29, 12, -1, -6, -5, -2
1.b. für bewegte Bildinformation des zweiten Halbbildes
-3, -3, 3, 17, 34, 46, 49, 40, 23, 6, -6, -9, -5, -1, 1 oder
2.a. für statische Bildinformation die selben Koeffizienten wie unter 1.a.
2.b. für bewegte Bildinformationen der ersten Halbbilder
2, 0, -6, -8, 0, 24, 52, 64, 52, 24, 0, -8, -6, 0, 2
2.c. für bewegte Bildinformation des zweiten Halbbildes
-3, -8, -6, 10, 37, 60, 62, 42, 12, -8, -12, -4, 3, 5, 2
Für die die Filterkoeffizienten zu 1.a., b. ist nachfolgend ein Anwendungsbeispiel aufgezeigt.

Statischer Fall:

In Zeile Int5 in Fig. 5 liegen der Bildpunkt der ungeradzahligen Zeile des 1250 Zeilen Bildes auf der gleichen räumlichen Lage wie der Bildpunkt des 900 Zeilen Bildes, Lage b. Es ergibt sich damit ein Filterkoeffizient mit dem Wert 50, welcher gemäß Fig. 6a im Maximum der Impulsantwort liegt. Ausgehend von der Impulsantwort gemäß Fig. 6a sowie der Spalte 1 gemäß Fig. 5 sind die beiden folgenden Werte links und rechts dieses Bildpunktes des 1250 Zeilen Bildes fiktiv Null. Für die Berechnung wird somit der dritte Koeffizient dieser Kurve gemäß Fig. 6a genommen. In diesem Falle weist er für beide räumlichen Lagen Int4, Int6 den Wert 12 auf. Gleiches gilt für den nächsten zu berechnenden Wert, der wegen der symmetrischen Anordnung der Kurve gemäß Fig. 6a sowie der räumlichen Lage Int3, Int7 in diesem Falle für beide zu errechnenden Werte -5 beträgt.

In diesem Beispiel errechnet sich der Bildpunkt des 900 Zeilen Bildes aus 50 * Bildpunkt Int5 plus 12* Bildpunkt Int4 plus 12* Bildpunkt Int6 minus 5* Bildpunkt Int3 minus 5* Bildpunkt Int7 geteilt durch Summe der Filterkoeffizientenwerte. Diese Summe kann z. B. 64 betragen. Vorteilhaft wird eine Summe gewählt, die eine Potenz von 2 ist.

Auf diese Weise werden auch die Bildpunkte des 900 Zeilen Bildes in den Lagen a und c aus den

4

Bildpunkten des 1250 Zeilen Bildes für den statischen Fall berechnet. Bei den statischen Bildern liegen die Bildpunkte des ersten und zweiten Halbbildes räumlich untereinander, so daß hinsichtlich ihrer Lage bzw. der Lage der berechneten Bildpunkte für das 900 Zeilen Bild keine Verschiebung notwendig ist.

Bewegter Fall

Wie in Spalte 4 aus Fig. 5 zu entnehmen ist, werden im Falle dynamischer Informationsinhalte die Bildpunkte des 900 Zeilen Bildes immer nur für die jeweilig geltenden Bildpunkte des Halbbildes des 1250 Zeilen Bildes errechnet, d.h. für die Berechnung des 900 Zeilen Bildes, welches anstelle des ersten Halbbildes wiedergegeben wird, werden für die Berechnung jeweils nur die ungeradzahligen Zeilen des 1250 Zeilen Bildes herangezogen. Die Impulsantwort ist symmetrisch zur Ordinate, wie in Fig. 6a dargestellt. Zur Schaltungsvereinfachung kann, wie Eingangs erwähnt, der gleiche Koeffizientensatz herangezogen werden wie für den statischen Fall.

Im Falle des zweiten Halbbildes, bei dem die geradzahligen Zeilen des 1250 Zeilen Bildes in die Zeilen des 900 Zeilen Bildes transcodiert werden, ist gemäß Fig. 5 Spalte 5 zu entnehmen, daß bedingt durch die räumliche und zeitliche Verschiebung der Bildpunkte des zweiten Halbbildes zu den Bildpunkten des ersten Halbbildes eine achsensymmetrische Lage wie in Fig. 6a nicht gegeben ist. Um die Verschiebung der Bildpunkte in vertikaler Richtung schaltungstechnisch in einem Rechenvorgang zu korrigieren, wird die Filterkurve in ihrer Phasenlage um 1,5 * Zeilenabtastperiode des 1250 Zeilen Bildes verschoben. Diese Verschiebung hat zur Folge, daß zur Berechnung des Bildpunktes b des 900 Zeilen Bildes der Bildpunkt Int4 höher bewertet wird als der Bildpunkt Int3 des 1250 Zeilen Bildes als Vor der Verschiebung. Durch die Verschiebung der Kurve zum ersten Halbbild wird erreicht, daß die Bildpunkte des 900 Zeilen Bildes, die aus dem ersten Halbbild errechnet wurden, räumlich in derselben Zeilenlage angesiedelt sind wie die Bildpunkte des 900 Zeilen Bildes, die aus dem zweiten Halbbild errechnet wurden.

Die folgende Tabelle veranschaulicht für die drei möglichen Fälle der Filterung die benötigten Zeilen des 1250 Zeilen Bildes. Zur Berechnung eines Bildpunktes des 900 Zeilen Bildes sind, wie in Fig. 5 beschrieben, jeweils pro Zeile des 900 Zeilen Bildes unterschiedliche Zeilen des 1250 Zeilen Bildes erforderlich.

Die UV-Bildsignale werden wie die Y-Bildsignale behandelt. Die Bewegungsdetektion für Y-Bildsignale wird getrennt für U- und V-Bildsignale übernommen.

Eine andere Möglichkeit besteht darin, den Mittelwert der Bewegungsdetektor-Summen am Eingang von 38 für die beiden Y-Bildpunkte, die zu einem UV-Bildpaar gehören, zu mitteln und das entsprechende daraus resultierende Bewegungsdetektor-Ausgangssignal für das UV-Bildpunktpaar zu verwenden. Eine weitere Möglichkeit besteht darin, für UV-Bildsignale eine eigene Bewegungsdetektion durchzuführen, getrennt oder für das UV-Bildpunktpaar.

## Tabelle 1

```
Zeilen-        benötigte Zeilen für Filterung/Bewegungsdetektion
Nummern
900 Z-B.
-------------------------------------------------------------------------
1          -1 0 1 2 3                               stat./Bewegungdetektion
        -3 -1   1   3   5                           1. Halbbild dynamisch
           -2   0   2   4   6                       2. Halbbild dynamisch
-------------------------------------------------------------------------
2              0 1 2 3 4                             stat./Bewegungdetektion
            -1   1   3   5   7                       1. Halbbild dynamisch
             0   2   4   6   8                       2. Halbbild dynamisch
-------------------------------------------------------------------------
3                2 3 4 5 6                           stat./Bewegungdetektion
            -1   1   3   5   7                       1. Halbbild dynamisch
             0   2   4   6   8                       2. Halbbild dynamisch
-------------------------------------------------------------------------
4                3 4 5 6 7
            1    3   5   7   9
                 2   4   6   8   10
-------------------------------------------------------------------------
5                  4 5 6 7 8
                3    5   7   9   11
                 4   6   8   10   12
-------------------------------------------------------------------------
6                  6 7 8 9 10
                3    5   7   9   11
                 4   6   8   10   12
-------------------------------------------------------------------------
7                    7 8 9 10 11
                  5    7   9   11   13
                   6   8   10   12   14
-------------------------------------------------------------------------
8                      8 9 10 11 12
                    7    9   11   13   15
                     8   10   12   14   16
-------------------------------------------------------------------------
9                       10 11 12 13 14
                    7    9   11   13   15
                     8   10   12   14   16
-------------------------------------------------------------------------
10                        11 12 13 14 15
                       9    11   13   15   17
                        10   12   14   16   18
-------------------------------------------------------------------------
11                          12 13 14 15 16
                        11    13   15   17   19
                         12   14   16   18   20
-------------------------------------------------------------------------
```

Am Anfang der Zeile sind die Zeilennummern des 900 Zeilen Bildes 1 bis 11 angegeben. Jede Zeile besteht aus drei Unterzeilen für den stationären Fall, sowie für das erste und das zweite Halbbild im Falle einer Bewegungsinformation. Rechts neben der Zeilennummer des 900 Zeilen Bildes sind die Zeilennummern des 1250 Zeilen Bildes angegeben, die für die unterschiedlichen Fälle zur Berechnung herangezogen werden.

Da bedingt durch die Hardware die Bildpunkte der Zeilen nur in kontinuierlicher Reihenfolge eingelesen werden können, wie der Tabelle jedoch zu entnehmen ist, in Zeile 2 die Bildpunkte der Zeilen 7 und 8 des 1250 Zeilen Bildes für die Berechnung erforderlich sind, sind diese hardwaremäßig gleichzeitig in den Zeilenspeicher einzulesen. Nachfolgend ist die Tabelle 1 in Tabelle 2 in Matrixschreibweise dargestellt.

## Tabelle 2

```
Zeilen-      Zeilennummern des 1250 Zeilen Bildes
Nummern
900
   1         -3    -2   -1   0    1    2    3    4    5    6    (7    8)
   2         (9)   -2   -1   0    1    2    3    4    5    6    7     8
   3          9   (10)  -1   0    1    2    3    4    5    6    7     8
   4          9    10  (11  12)   1    2    3    4    5    6    7     8
   5          9    10   11  12  (13)   2    3    4    5    6    7     8
   6          9    10   11  12   13  (14)   3    4    5    6    7     8
   7          9    10   11  12   13   14  (15  16)   5    6    7     8
   8          9    10   11  12   13   14   15  16  (17)   6    7     8
   9          9    10   11  12   13   14   15  16   17  (18)   7     8
  10          9    10   11  12   13   14   15  16   17   18  (19   20)
  11        (21)   10   11  12   13   14   15  16   17   18   19    20
```

Tabelle 2 verdeutlicht, daß für die Berechnung zehn Werte erforderlich sind. Zuzüglich für die Berechnung der Bildpunkte der nächsten Zeile sind wegen der Transcodierung von 1250 Zeilen auf 900 Zeilen maximal zwei weitere Bildpunkte der Zeilen zu speichern, so daß zur Bereitstellung der zu berechnenden Punkte des 900 Zeilen Bildes maximal Bildpunkte von 12 Zeilen des 1250 Zeilen Bildes zur Verfügung stehen müssen. Die jeweils mit dem Systemtakt einzuschreibenden Zeilenbildpunkte sind in der Tabelle 2 eingeklammert dargestellt. Die Zeilen des 1250 Zeilen Bildes nach Tabelle 2 sind die Zeilen des Vollbildes n-1, welches zuletzt vollständig in einen der Vollbildspeicher 1,3,8 eingelesen wurde.

Zur Bewegungsdetektion werden die Bildpunkte des 1250 Zeilen Bildes herangezogen, welche zuerst und welche zeitlich davor in zwei der Vollbildspeicher 1,3,8 eingeschrieben wurden. Für die Bewegungsdetektion werden räumlich dieselben Bildpunkte herangezogen, wie sie bei der Berechnung der Bildpunkte für den statischen Fall verwendet werden. Eine Art der Bewegungsdetektion könnte sein, daß man die Summe der Absolutwerte der Differenzen zwischen den entsprechenden Bildpunkten aus den beiden Vollbildspeicher, wie sie im statischen Fall zur Verfügung stehen, verwendet und zwar so, daß man die Bildpunkte des Bildes n-1 sowie die Bildpunkte des Bildes n-2 derselben vertikalen und horizontalen Lage verwendet und sie entsprechend der Berechnung der Bildpunktes des 900 Zeilen Bildes für den statischen Fall gewichtet. Eine weitere Möglichkeit der Bewegungsdetektion besteht darin, daß man die Absolutwerte der Differenzen der Bildpunkte entsprechend der berechneten Bildpunkte des 900 Zeilen Bildes für den statischen Fall aufsummiert, und im Falle, daß diese Summe einen Schwellwert überschreitet, diese Information als Bewegung für diesen Bildpunkt verwertet.

Eine weitere Möglichkeit besteht darin, eine mögliche Bewegung des Bildpunktes im Zusammenwirken mit den Bewegungen von anderen Bildpunkten derselben Zeile zu bewerten, und im Falle, daß die überwiegende Zahl der Bildpunkte von z.B. 5 benachbarten Bildpunkten eine Bewegung aufweisen, dies als Kriterium zu nehmen, für diesen einen Bildpunkt Bewegung zu detektieren.

Da es für die Bewegungsdetektion erforderlich ist, daß die Bildpunkte des Bildes n-2 die gleiche Adresse im Vollbildspeicher 1, 3, 8 wie die Bildpunkte zur statischen Filterung im Vollbildspeicher 1, 3, 8 für Bild n-1 aufweisen, der Speicherinhalt nur an festgelegten Zeilen, wie beschrieben, zwei parallele Speicher hat, und nur von diesen Adressen zwei Zeilen gleichzeitig ausgelesen werden könnenjeweils dieselben wie in Tabelle 2 - sind maximal 10 Zeilen zu speichern entsprechend Tabelle 3.

## Tabelle 3

| Zeilen-Nummer 900 Z-B. | Zeilennummern des 1250 Zeilen Bildes | | | | | | | | | |
|---|---|---|---|---|---|---|---|---|---|---|
| 1  | -1  | 0    | 1    | 2    | 3    | 4    | 5    | 6    | (7   | 8)   |
| 2  | (9) | 0    | 1    | 2    | 3    | 4    | 5    | 6    | 7    | 8    |
| 3  | 9   | (10) | 1    | 2    | 3    | 4    | 5    | 6    | 7    | 8    |
| 4  | 9   | 10   | (11  | 12)  | 3    | 4    | 5    | 6    | 7    | 8    |
| 5  | 9   | 10   | 11   | 12   | (13) | 4    | 5    | 6    | 7    | 8    |
| 6  | 9   | 10   | 11   | 12   | 13   | (14) | 5    | 6    | 7    | 8    |
| 7  | 9   | 10   | 11   | 12   | 13   | 14   | (15  | 16)  | 7    | 8    |
| 8  | 9   | 10   | 11   | 12   | 13   | 14   | 15   | 16   | (17) | 8    |
| 9  | 9   | 10   | 11   | 12   | 13   | 14   | 15   | 16   | 17   | (18) |
| 10 | (19 | 20)  | 11   | 12   | 13   | 14   | 15   | 16   | 17   | 18   |
| 11 | 19  | 20   | (21) | 12   | 13   | 14   | 15   | 16   | 17   | 18   |

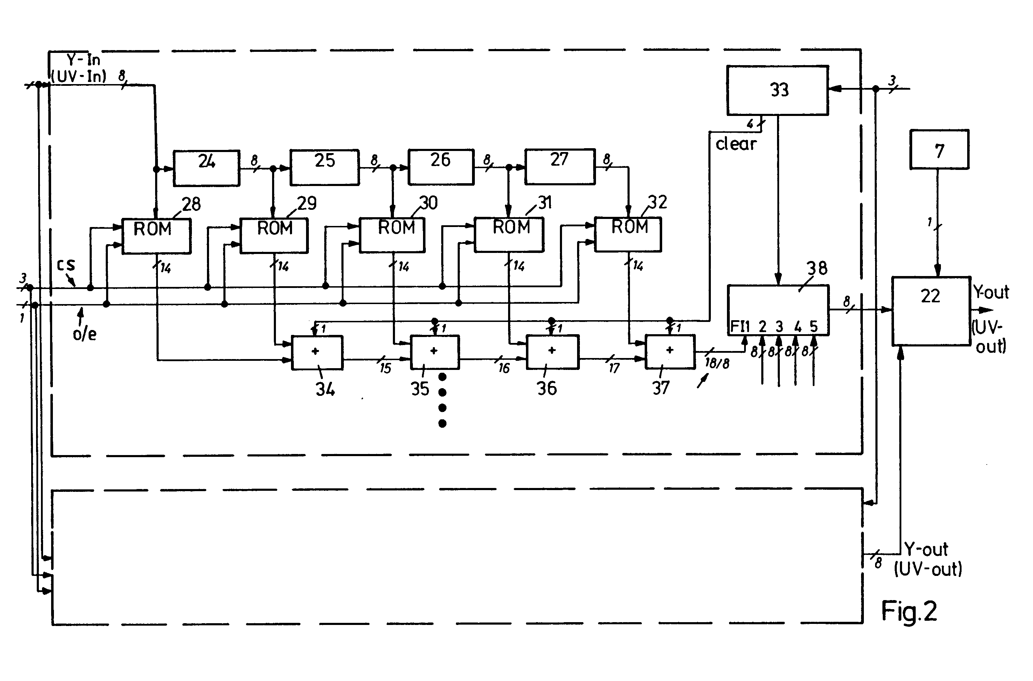

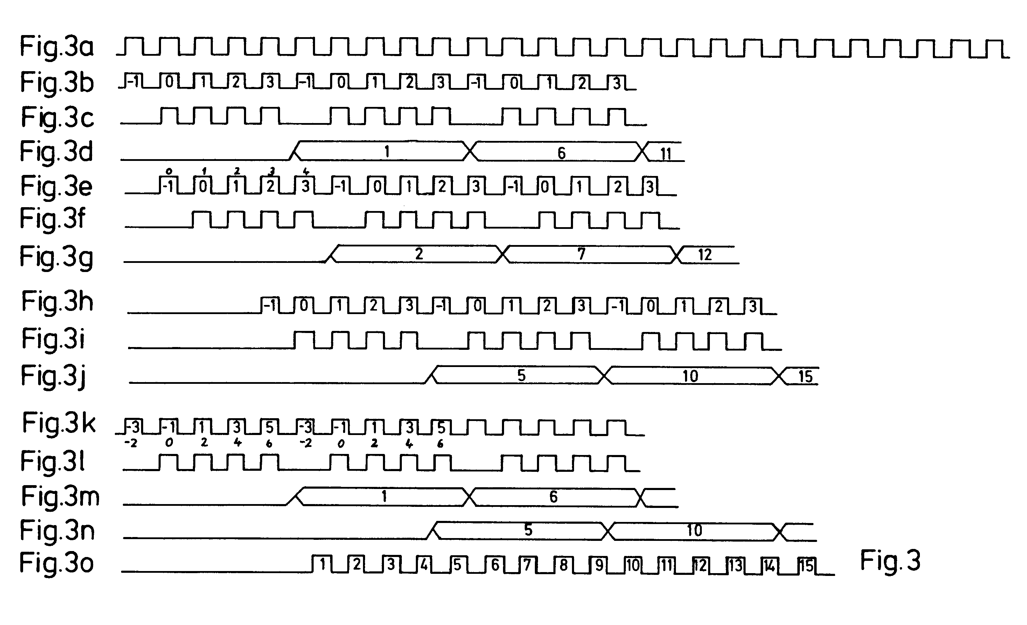

Fig. 2 zeigt den Aufbau der vertikalen Filter 10, 21. Wie zu Fig. 5 beschrieben, werden für die Berechnung eines Bildpunktes eines 900 Zeilenbildes 5 Bildpunktes des 1250 Zeilenbildes benötigt. Zuerst wird der Aufbau des statischen vertikalen Filters 10 geschrieben. Die ankommenden Bildpunkte des 1250 Zeilenbildes werden über eine 8 Drahtleitung zu einem ROM 28 als auch zu einem Verzögerungsglied 24. Das ROM 28 enthält einerseits die Koeffizientetabelle entsprechend Tabelle 2 die über eine drei Drahtleitung adressiert wird, sowie alle der $2^8$ möglichen Zustände der ankommenden Daten. Liegt ein 8 Bitwort am Eingang des ROM's 28 an, so liegt in Abhängigkeit von der Wertigkeit des 8 Bit-Wortes und des entsprechenden Koeffizienten am Ausgang des ROM's 28 ein 14 Bitwort entsprechend der Tabelle an. Der Wert des Bildpunktes, welcher dem ROM 28 zugeführt wurde, wird verzögert durch die Verzögerungsschaltung 24, einem weiteren ROM 29 zugeführt. Die Verzögerungszeit beträgt 12,3 ns. Dies entspricht einem Taktzyklus des 81 MHz Taktes. ROM 29 ist genauso aufgebaut wie ROM 28. Daran schließen sich weitere Verzögerungsleitungen 26, 27 sowie ROM's 30, 31 und 32 in gleicher Bauweise an. Jedes ROM 28 bis 32 hat einem 14 Bitausgang. Die Ausgänge des ROM's 28, 29 führen auf einen Addierer 34, die Ausgänge des ROM's 30 und des Addierers 34 führen auf einen Addierer 35, die Ausgänge des ROM's 31 und des Addierers 35 auf einen Addierer 36, und die Ausgänge des ROM's 32 und des Addierers 36 auf einen Addierer 37. Am Ausgang des Addierers 37 liegt ein 18 Bitwort an. Die 4 höchstwertigen Bits sind auf Grund der Impulsantwort, welche sowohl positive als auch negative Werte aufweist, immer Null. Zur Weiterverarbeitung werden die 6 niederwertigen Bits nicht weiterverwertet, was einer Teilung durch 64 entspricht, so daß einem Umschalter 38 wieder ein 8 Bitwort zugeführt wird. Dieses 8 Bitwort stellt den errechneten Bildpunkt des 900 Zeilenbildes dar. Eine Steuereinheit 33, welche Teil des Koeffizienten und Zeilenadressgenerators 19 ist, übernimmt die Steuerung des Umschalters 38 sowie der Addierer 34 bis 37. Der 8 Bitausgang des Umschalters 38 führt auf den in Fig. 1 beschriebenen Umschalter 22. Wie der Fig. 2 zu entnehmen ist, sind die ROM's 28 bis 32 mit einem weiteren Eingang o/e versehen. Für den statischen Fall der vertikalen Filterung ist dieser Eingang o/e unbenutzt. Weiter ist der Fig. 2 zu entnehmen, daß der Umschalter 38 fünf Eingänge aufweist. Wie in Fig. 1 beschrieben, sind die vertikalen Filter 10, 21 je 5x vorhanden. Die Eingänge des Umschalters 38 führen somit auf 5 parallel liegende vertikale Filter gemäß Fig. 3.

Das für dynamische Informationsinhalte zuständige vertikale Filter 21 weist die gleiche Aufbauweise wieder wie die eben beschriebene Schaltung. Wie in Fig. 5 beschrieben, sind jedoch für die beiden Halbbilder unterschiedlichen Koeffizientensätze für die Berechnung der Bildpunkte des 900 Zeilenbildes erforderlich. Ein Umschalten auf diese unterschiedlichen Koeffizientensätze geschieht durch den für den statischen Fall nicht verwendeten Eingang o/e der ROM's 28 bis 32, und zwar werden durch die Leitung CS die Koeffizienten ausgewählt, und durch die Leitung o/e umgeschaltet zwischen ersten Halbbild und zweiten Halbbild. Der in Fig. 2 gestrichelt gezeichnete Block, vertikales Filter für dynamische Informationsinhalte, weist somit denselben Inhalt auf, wie der über ihm liegende Block. Der Ausgang des für die Bewegung zuständigen vertikalen Filters 21 führt auf den Umschalter 22.

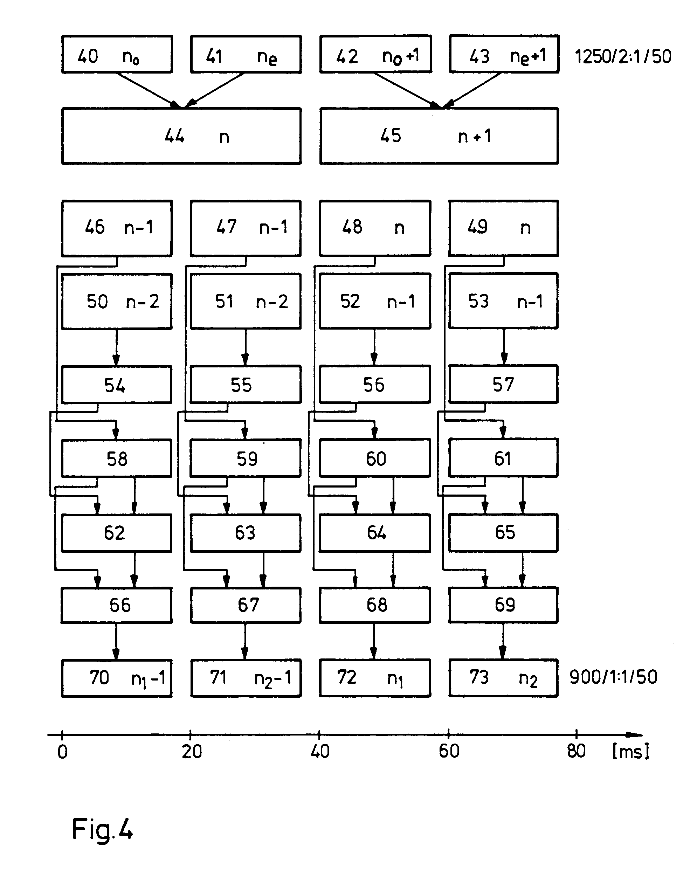

Fig. 4 zeigt den Verarbeitungsablauf aufgetragen über die Zeit. Das 1250 Zeilenbild 44, 45 setzt sich aus den Halbbildern 40, 41 bzw. 42, 43 zusammen. Das 1250 Zeilenbild 46, 47 ist das Bild n-1. Das Bild 48, 49 repräsentiert das Bild n. Aus diesen Bildern 46, 47 werden 12 Zeilen 58 bzw. 59 jeweils verarbeitet.

8

Diese 12 Zeilen werden gleichzeitig zur Bewegungsdetektion 62 bzw. 63 herangezogen. Aus dem Bild 50, 51, welches das Bild n-2 repräsentiert, werden jeweis 10 Zeilen 54 und 55 für die Bewegungsdetektion 62 bzw. 63 verarbeitet. Die 12 Zeilen 58 werden vertikal gefiltert 66 und ergeben ein vollständiges 900 Zeilenbild 70 während der ersten 20 ms. Während der nächsten 20 ms wird der selbe Zyklus durchlaufen. Daran anschließend werden die Bilder mit einem Inkrement von 1 für die nächsten 40 ms je zweimal verarbeitet.

Fig. 3 gibt das Zeitdiagramm des Bewegungsdetektors 7 und der Filteranordnungen 10, 21 wieder. Fig. 3a zeigt den 81 MHz Systemtakt. Die Figuren 3b bis 3j zeigen das Zeitdiagramm des Bewegungsdetektors 7 sowie des statischen Filters 10. Fig. 3b gibt den Lesezyklus dieses Filters und des Bewegungsdetektors wieder. Bei jedem Takt wird einer von 5 Bildpunkten gelesen. Und zwar für den ersten Lesezyklus die Werte der Bildpunkte aus den Zeilen -1 0 1 2 und 3, wobei für die Bewegungsdetektion und das Filter der Wert 1 den aktuellen zu berechnenden Bildpunkt wiedergibt. Während die beiden anderen Werte -1 0, 2 3 die in der Spalte des Bildpunktes liegenden benachbarten Bildpunkte darstellen. Wie beschrieben, werden die Bildpunkte der Bilder n-1, n-2 voneinander subtrahiert sowie deren Betrag gebildet. Fig. 3c zeigt dann den Additionszyklus der Bewegungsdetektion an. Nach Ablauf von 4 Takten liegt ein Additionsergebnis dieser 5 Werte vor, welche in Abhängigkeit von einem zu wählendem Schwellwert gemäß Fig. 3d ein Ergebnis liefert, welches angibt, ob Bewegung für diesen Bildpunkt detektiert wurde oder nicht. Dieses Ergebnis wird 5 Taktzyklen gehalten, bis der für den entsprechenden nächsten Bildpunkt durch diesen Detektor berechnete Wert vorhanden ist. Der darauf folgende Wert ist dem 6. Bildpunkt zuzuordnen.

Fig. 3e - g zeigt die Arbeitsweise des Bewegungsdetektors für den Bildpunkt 2 an. Wie der Fig. 3e zu entnehmen ist, sind die Bildpunkte um je einen Taktzyklus verschoben. Fig. 3h - j zeigt die Bewegungsdetektion des Bildpunktes 5, welche um 4 Takte gegenüber Fig. 3b verschoben ist. Wie zu Fig. 5, unterschiedet sich die Bewegungsdetektion von der vertikalen Filterung für den statischen Fall nur dadurch, daß bei der Bewegungsdetektion die Differenzwerte der Bildpunkte absolut verarbeitet werden, während sie bei der vertikalen Filterung für den statischen Fall mittels Filterkoeffizienten verwertet werden.

Fig. 3k zeigt den zeitlichen Ablauf der Filterung für den dynamischen Fall, wobei in der ersten Zeile die Berechnung der Bildpunkte des 900 Zeilenbildes aus dem ersten Halbbild des 1250 Zeilenbildes geschieht, während in der zweiten Zeile die Berechnung der Bildpunkte des 900 Zeilenbildes aus dem zweiten Halbbild des 1250 Zeilenbildes erfolgt. Fig. 31 stimmt mit der Beschreibung von Fig. 3c überein. In Fig. 3m wird gemäß Fig. 2 sowohl für den statischen Fall als auch für den Fall der Bewegung das Ergebnis des Addierers 37 aus Fig. 2 entsprechend der dort beschriebenen Vorgehensweise geshiftet und auf den Eingang des Umschalters 22 geschaltet. Während der 5 Taktzyklen werden die jeweiligen Werte in den Filtern 10, 21 gehalten, so daß gemäß Fig. 3o eine Zeile nacheinander in aufsteigender Bildpunktzahl aus dem Umschalter 22 ausgelesen werden kann.

## Patentansprüche

1. Transcoder zur Umsetzung eines Interlace-Bildsignals in ein Progressiv-Bildsignal, wobei digitalisierte Bildpunkte des Interlace-Bildsignals in Speichermitteln (1, 3, 8) gespeichert werden und aus diesen gespeicherten Bildpunkten die Bildpunkte des Progressiv-Bildsignals unter Verwendung von Eiltermitteln (10, 21) bewegungsadaptiv durch vertikale Interpolation ermittelt werden, **dadurch gekennzeichnet,** daß das Verhältnis zwischen Vollbild-Zeilenzahl des Interlace-Bildsignals und Zeilenzahl des Progressiv-Bildsignals $\frac{4}{3}$ ist und daß die Filtermittel (10, 21) mit Hilfe voll zwischengeschalteten Mehrfach-Zeilenspeichern (5, 9) die folgenden Interpolationsarten durchführen:

   a) statischer Bildinhalt
   Zu jeweils vier in einem Vollbild vertikal aufeinanderfolgenden Bildpunkten des Interlace-Bildsignals werden jeweils drei übereinanderliegende Bildpunkte des Progressiv-Bildsignals ermittelt, wobei drei erste, symmetrische Koeffizientensätze (Sp3: a, b, c) verwendet werden;
   b) bewegter Bildinhalt, erstes Halbbild des Interlace-Bildsignals als Quellsignal
   Zu jeweils vier in einem Halbbild vertikal aufeinanderfolgenden Bildpunkten des Interlace-Bildsignals werden jeweils drei übereinanderliegende Bildpunkte des Progressiv-Bildsignals ermittelt, wobei drei zweite, symmetrische Koeffizientensätze (Sp4: a, b, c) verwendet werden;
   c) bewegter Bildinhalt, zweites Halbbild des Interlace-Bildsignals als Quellsignal
   Zu jeweils vier in einem Halbbild vertikal aufeinanderfolgenden Bildpunkten des Interlace-Bildsignals werden jeweils drei übereinanderliegende Bildpunkte des Progressiv-Bildsignals ermittelt, wobei drei dritte, unsymmetrische Koeffizientensätze (Sp5: a, b, c) verwendet werden, bei denen die vertikale Lage des jeweils zu interpolierenden Bildpunkts zwischen den Orten der beiden maximalen Koeffizienten des jeweiligen Koeffizientensatzes liegt.

**EP 0 327 982 B1**

**2.** Transcoder nach Anspruch 1, **dadurch gekennzeichnet,** daß in die Speichermittel (1, 3, 8) jede dritte Zeile doppelt eingeschrieben wird.

**3.** Transcoder nach Anspruch 2, **dadurch gekennzeichnet,** daß während des Schreibvorganges eines Interlace-Bilds n in die Speichermittel (1, 3, 8) Zeilen gleicher Adressierung des zeitlich davor liegenden Interlace-Bilds n-1 in einen Mehrfach-Zeilenspeicher (9) eingeschrieben werden.

**4.** Transcoder nach Anspruch 3, **dadurch gekennzeichnet,** daß in dem Mehrfach-Zeilenspeicher (9) zwölf Zeilen speicherbar sind.

**5.** Transcoder nach einem oder mehreren der Ansprüche 1 bis 4, **dadurch gekennzeichnet,** daß die ersten, zweiten und dritten Koeffizientensätze jeweils drei mal fünf Koeffizienten umfassen, wobei insbesondere die Koeffizienten der zweiten Koeffizientensätze gleich den Koeffizienten der ersten Koeffizientensätze sind.

**6.** Transcoder nach einem oder mehreren der Ansprüche 1 bis 5, **dadurch gekennzeichnet,** daß zur Ermittlung von dynamischen Bildinhalten neben den Bildpunkten für die vertikale Filterung eines statischen Bildinhaltes die Bildpunkte gleicher räumlicher Lage des vorangehenden Bildes in einem Bewegungsdetektor (7) verwendet werden.

**7.** Transcoder nach Anspruch 6, **dadurch gekennzeichnet,** daß die Werte der Bildpunkte mittels eines Filters (Fig. 6) gewichtet werden.

**8.** Transcoder nach Anspruch 6 und/oder 7, **dadurch gekennzeichnet,** daß die Werte der Bildpunkte der aufeinanderfolgenden Bilder gleicher räumlicher Lage subtrahiert und die Beträge dieser Differenzen addiert werden.

**9.** Transcoder nach Anspruch 8, **dadurch gekennzeichnet,** daß der Bewegungsdetektor (7) eine Schwellwert-Überschreitung der Summe dieser Beträge ermittelt und eine begrenzte Anzahl von diesen Schwellwertergebnissen speichert und ein Signal liefert, wenn jeweils die Mehrzahl der Schwellwertergebnisse eine Bewegung angezeigt haben.

**10.** Transcoder nach einem oder mehreren der Ansprüche 1 bis 9, **dadurch gekennzeichnet,** daß die ersten und/oder zweiten Koeffizientensätze (Sp 3, Sp4) die Koeffizienten

-2, -1, 44, 29, -6;
-5, 12, 50, 12, -5;
-6, 29, 44, -1, -2,
und/oder die dritten Koeffizientensätze (Sp5) die Koeffizienten
3, 46, 23, -9, 1;
-3, 34, 40, -6, -1;
-3, 17, 49, 6, -5 enthalten.

**Claims**

**1.** Transcoder for the conversion of an interlace picture signal into a progressive picture signal, digitalized pixels of the interlace picture signal being stored in storage means (1, 3, 8) and the pixels of the progressive picture signal being determined from these stored pixels using filter means (10, 21) motion-adaptively by vertical interpolation, characterized in that the relationship between the number of picture lines of the interlace picture signal and the number of lines of the progressive picture signal is 4/3 and that the filter means (10,21) perform the following types of interpolation with the aid of inserted multiple-line storage devices (5, 9):
a) static picture content
For every four vertically successive pixels of the interlace picture signal in a picture, three pixels lying one above the other of the progressive picture signal are determined in each case, three first, symmetrical coefficient sets (Col 3: a, b, c) being used;
b) moving picture content, first field of the interlace picture signal as source signal
For every four vertically successive pixels of the interlace picture signal in a field, three pixels lying one above the other of the progressive picture signal are determined in each case, three second, symmetrical coefficient sets (Col4: a, b, c) being used;

c) moving picture content, second field of the interlace picture signal as source signal

For every four vertically successive pixels of the interlace picture signal in a field, three pixels lying one above the other of the progressive picture signal are determined in each case, three third, asymmetrical coefficient sets (Col5: a, b, c) being used, in which the vertical position of the pixel to be interpolated in each case lies between the locations of the two maximum coefficients of the respective coefficient set.

2. Transcoder according to claim 1, characterized in that every third line is written twice into the storage means (1, 3, 8).

3. Transcoder according to claim 2, characterized in that during the process of writing an interlace picture n into the storage means (1, 3, 8), lines with the same address of the interlace picture n-1 lying temporally before it are written into a multiple-line storage device (9).

4. Transcoder according to claim 3, characterized in that twelve lines can be stored in the multiple-line storage device (9).

5. Transcoder according to one or more of claims 1 to 4, characterized in that the first, second and third coefficient sets each contain three times five coefficients, the coefficients of the second coefficient sets in particular being equal to the coefficients of the first coefficient sets.

6. Transcoder according to one or more of claims 1 to 5, characterized in that, to ascertain dymanic picture contents, the pixels of the same spatial position of the preceding picture are used in a movement detector (7) as well as the pixels for the vertical filtering of a static picture content.

7. Transcoder according to claim 6, characterized in that the values of the pixels are evaluated by means of a filter (Fig. 6).

8. Transcoder according to claim 6 and/or 7, characterized in that the values of the pixels of successive pictures of the same spatial position are subtracted and the amounts of these differences are added.

9. Transcoder according to claim 8, characterized in that the movement detector (7) detects a passing of the sum of these amounts beyond a threshold value and stores a limited number of these threshold value results and supplies a signal if the majority of the threshold value results in each case have indicated a movement.

10. Transcoder according to one or more of claims 1 to 9, characterized in that the first and/or second coefficient sets (Col3, Col4) contain the coefficients
-2, -1, 44, 29, -6;
-5, 12, 50, 12, -5;
-6, 29, 44, -1, -2;
and/or the third coefficient sets (Col5) contain the coefficients
3, 46, 23, -9, 1;
-3, 34, 40, -6, -1;
-3, 17, 49, 6, -5.

**Revendications**

1. Transcodeur pour la transformation d'un signal d'image entrelacé en un signal d'image progressif, des points d'image numérisés du signal d'image entrelacé étant mémorisés dans des organes à mémoire (1, 3, 8) et les points d'image du signal d'image progressif étant déterminés à partir de ces points d'image mémorisés en utilisant des organes de filtrage (10,21) de manière adaptative au mouvement par interpolation verticale, **caractérisé en ce** que le rapport entre le nombre de lignes de l'image du signal d'image entrelacé et le nombre de lignes du signal d'image progressif est de 4/3 et que les organes de filtrage (10, 21) effectuent à l'aide de mémoires multiples de lignes (5, 9) qui sont intercalées les types d'interpolation suivants :

a) contenu d'image statique

pour respectivement quatre points d'image du signal d'image entrelacé se succédant verticalement dans une image, respectivement trois points d'image superposés du signal d'image progressif sont déterminés, trois premiers taux de coefficients symétriques (colonne 3 : a, b, c) étant utilisés ;

b) contenu d'image en mouvement, première trame du signal d'image entrelacé comme signal de source

pour respectivement quatre points d'image du signal d'image entrelacé se succédant verticalement dans une image, respectivement trois points d'image superposés du signal d'image progressif sont déterminés, trois seconds taux de coefficients symétriques (colonne 4 : a, b, c) étant utilisés ;

c) contenu d'image en mouvement, seconde trame du signal d'image entrelacé comme signal de source

pour respectivement quatre points d'image du signal d'image entrelacé se succédant verticalement dans une image, respectivement trois points d'image superposés du signal d'image progressif sont déterminés, trois troisièmes taux de coefficients asymétriques (colonne 5 : a, b, c) étant utilisés pour lesquels la position verticale du point d'image devant être respectivement interpolé se situant entre les endroits des deux coefficients maximaux du taux respectif de coefficients.

2.  Transcodeur selon la revendication 1, **caractérisé en ce** que chaque troisième ligne est mise en mémoire deux fois dans les organes à mémoire (1, 3, 8).

3.  Transcodeur selon la revendication 2, **caractérisé en ce** que pendant l'opération d'enregistrement d'une image entrelacée n dans les organes à mémoire (1, 3, 8) des lignes de même adressage de l'image entrelacée n-1 située avant dans le temps sont enregistrées dans une mémoire multiple de lignes (9).

4.  Transcodeur selon la revendication 3, **caractérisé en ce** que douze lignes peuvent être mises en mémoire dans la mémoire multiple de lignes (9).

5.  Transcodeur selon l'une ou plusieurs des revendications 1 à 4, **caractérisé en ce** que les premiers, seconds et troisièmes taux de coefficients comprennent respectivement chacun trois fois cinq coefficients, les coefficients des seconds taux de coefficients étant en particulier les mêmes que les coefficients des premiers taux de coefficients.

6.  Transcodeur selon l'une ou plusieurs des revendications 1 à 5, **caractérisé en ce** que, pour déterminer les contenus d'image dynamiques en plus des points d'image pour le filtrage vertical d'un contenu d'image statique, les points d'image de même position spatiale de l'image précédente sont utilisés dans un détecteur de mouvement (7).

7.  Transcodeur selon la revendication 6, **caractérisé en ce** que les valeurs des points d'image sont pondérées au moyen d'un filtre (figure 6).

8.  Transcodeur selon la revendication 6 et/ou 7, **caractérisé en ce** que les valeurs des points d'image des images successives de même position spatiale sont soustraites et les valeurs de ces différences sont ajoutées.

9.  Transcodeur selon la revendication 8, **caractérisé en ce** que le détecteur de mouvement (7) détecte un dépassement de valeur de seuil de la somme de ces valeurs, mémorise un nombre limité de ces résultats de valeurs de seuil et donne un signal lorsque respectivement la pluralité des résultats de valeurs de seuil a indiqué un mouvement.

10. Transcodeur selon l'une ou plusieurs des revendications 1 à 9, **caractérisé en ce** que les premiers et/ou seconds taux de coefficients (colonne 3, colonne 4) contiennent les coefficients

-2, -1, 44, 29, -6 ;

-5, 12, 50, 12, -5 ;

-6, 29, 44, -1,-2

et/ou les troisièmes taux de coefficients (colonne 5) les coefficients

3, 46, 23, -9, 1 ;

-3, 34, 40, -6, -1 ;

-3, 17, 49, 6, -5.

Fig.1

EP 0 327 982 B1

Fig.2

EP 0 327 982 B1

Fig.3a

Fig.3b

Fig.3c

Fig.3d

Fig.3e

Fig.3f

Fig.3g

Fig.3h

Fig.3i

Fig.3j

Fig.3k

Fig.3l

Fig.3m

Fig.3n

Fig.3o

Fig.3

EP 0 327 982 B1

Fig.4

| Sp0 | Sp1 1250/2:1/50 o e | Sp2 900/1:1/50 | Sp3 Stat. a b c | Sp4 moving o a b c | Sp5 moving e a b c |
|---|---|---|---|---|---|
| Int1, b | X o | X O | | -5 | |
| Int2 | x O | | | | -3 |
| a | x O | X O | | | |
| Int3 | X o | | -5 | -6 12 -2 | |
| c | x o | X O | | | |
| Int4 | x O | | -2 12 | | 3 34 -3 |
| Int5, b | X o | [X O] | -1 50 | 29 50 -1 | |
| Int6 | x O | [X O] | 44 12 -6 | | 46 40 17 |
| a | x O | | | | |
| Int7 | X o | [X O] | 29 -5 29 | 44 12 44 | |
| c | x o | | | | |
| Int8 | x O | | -6 44 | | 23 -6 49 |
| Int9, b | x o | X O | -1 | -1 -5 29 | |
| Int10 | x o | | -2 | | -9 -1 6 |
| a | x o | X O | | | |
| Int11 | X o | | | -2 -6 | |
| c | x o | X O | | | |
| Int12 | O | | | | 1 -5 |

Fig.5

Fig.6a

Fig.6b